# EUROPEAN PATENT SPECIFICATION

(11) **EP 2 670 608 B1**
(45) Date of publication and mention of the grant of the patent: **15.03.2017**
(21) Application number: 11796897.4
(22) Date of filing: 06.12.2011
(51) Int. Cl.: B60C 1/00, B60C 5/14, B29D 30/00

(54) **CONTOURED TIRE INNERLINERS AND METHODS OF MAKING THEREOF**
PROFILIERTE REIFENKAPPEN UND HERSTELLUNGSVERFAHREN DAFÜR
REVÊTEMENTS INTÉRIEURS DE PNEU PROFILÉS ET LEURS PROCÉDÉS DE FABRICATION

(30) Priority: 01.02.2011 US 201161438535 P
(43) Date of publication of application: 11.12.2013
(73) Proprietor: ExxonMobil Chemical Patents Inc., Baytown, TX 77520 (US)
(72) Inventor: RODGERS, Michael, B., Seabrook, TX 77586-2864 (US); SHANNON, Porter, C., Seabrook, TX 77586 (US); CHENG, Jianya, J., Kingwood, TX 77345 (US); MEASMER, Matthew, B., Deer Park, TX 77536 (US); MANDERS, Peter, W., Hudson, OH 44236 (US)
(74) Representative: ExxonMobil Chemical Europe Inc.
(86) International application number: PCT/US2011/063559
(87) International publication number: WO 2012/106027

(56) References cited:
- EP-A1- 0 722 850
- GB-A- 1 486 782
- US-A- 4 171 237
- US-B1- 6 482 282

## Description

### FIELD OF THE INVENTION

The description relates to innerliners for tires, and in particular to contoured elastomer-based dynamically vulcanized alloy innerliners and a process to prepare them for being formed into a component of a tire.

### BACKGROUND

Known innerliners for tires are disclosed in EP-A-0722850, GB-A-1486782 and US-B-6482282. The innerliners of pneumatic tires are critical for the overall performance of the tires. Using materials that have lower air permeability allows for gauging down the innerliner, which in turn improves fuel efficiency. Newer technology using Dynamically Vulcanized Alloys ("DVA") can allow for this. DVA blown film is a barrier film technology that is a dynamically vulcanized blend of an elastomer and thermoplastic. An example of this technology is described by Tracey and Tsou in "Dynamically Vulcanized Alloy Innerliners" in RUBBER WORLD, published September 1, 2007, pp. 17-21.

Contoured innerliners are important for tires, particularly so for large aspect ratio tires, as the tire undergoes a shaping step as the tire casing is being built. Due to this shaping step, the liner stretches in the centerline region and shoulder regions. To compensate, a heavier gauge in the centerline and in the corresponding shoulder zone has been used in non-alloy innerliners thereby ensuring a uniform gauge in the final cured tire.

However, DVA innerliners are typically made by a blown film process and tend to have a uniform gauge, therefore lacking contour, in the green tire. During the shaping step, the DVA innerliners typically non-uniformly stretch on the tire drum, especially in the shoulder and centerline region, such that the innerliner of the cured tire may have a non-uniform gauge. The thinner areas, such as in the shoulder and centerline regions, may be susceptible to greater air permeation, thereby possibly leading to an increase in oxidation and aging of the internal tire rubber components. Accordingly, there is a need for contoured DVA innerliners that provide improved barrier properties, have maintained or improved mechanical properties, and have a uniform gauge in the final cured tire.

### SUMMARY

This disclosure relates to barrier films useful as tire innerliners, comprising a dynamically vulcanized alloy of an elastomer and an engineering resin, wherein the film is contoured.

This disclosure further relates to articles, in particular, tires formed from contoured tire innerliners. The tires comprise an innerliner having a substantially uniform gauge.

This disclosure also relates to a method of making a barrier film and/or a tire innerliner comprising: providing a contoured tire innerliner, wherein the contoured tire innerliner comprises a dynamically vulcanized alloy of an elastomer and an engineering resin.

This disclosure also relates to the method further comprising (i) providing a seamless tire innerliner, having a substantially uniform gauge, the seamless innerliner being in the form of a sleeve, wherein the seamless tire innerliner comprises a dynamically vulcanized alloy of an elastomer and an engineering resin; (ii) subjecting the seamless tire innerliner to stretching in at least one of the radial and axial directions; and (iii) producing a contoured tire innerliner.

This disclosure also relates to methods of making a pneumatic tire comprising: providing a contoured tire innerliner, wherein the contoured tire innerliner comprises a dynamically vulcanized alloy of an elastomer and an engineering resin. The present invention is a method of making a tire innerliner as defined in claim 1.

### BRIEF DESCRIPTION OF THE DRAWINGS

Figure 1 shows a cross-section of a representative tire.
Figure 2 shows representations of exemplary cross-sections of inventive innerliners.
Figure 3 shows the gauge profile of an exemplary DVA innerliner made from cast film.

### DETAILED DESCRIPTION

Various specific embodiments, versions, and examples of the invention will now be described, including preferred embodiments and definitions that are adopted herein for purposes of understanding the claimed invention. While the illustrative embodiments have been described with particularity, it will be understood that various other modifications will be apparent to and can be readily made by those skilled in the art without departing from the scope of the invention. For determining infringement, the scope of the "invention" will refer to any one or more of the appended claims, including their equivalents and elements or limitations that are equivalent to those that are recited.

### Definitions

Definitions applicable to the presently described invention are as described below.

Rubber refers to any polymer or composition of polymers consistent with the ASTM D1566 definition: "a material that is capable of recovering from large deformations, and can be, or already is, modified to a state in which it is essentially insoluble (but can swell) in boiling solvent..." Furthermore, the rubber is an amorphous material. Elastomer is a term that may be used interchangeably with the term rubber. Elastomeric composition refers to any composition comprising at least one elastomer as defined above.

A vulcanized rubber compound, as defined by ASTM D1566, refers to "a crosslinked elastic material compounded from an elastomer, susceptible to large deformations by a small force capable of rapid, forceful recovery to approximately its original dimensions and shape upon removal of the deforming force." A cured elastomeric composition refers to any elastomeric composition that has undergone a curing process and/or comprises or is produced using an effective amount of a curative or cure package, and is a term used interchangeably with the term vulcanized rubber compound.

The term "phr" is parts per hundred rubber or "parts", and is a measure common in the art wherein components of a composition are measured by weight, relative to a total weight of all of the elastomer components. The total phr or parts for all rubber components, whether one, two, three, or more different rubber components is present in a given recipe is always defined as 100 phr. All other non-rubber components are ratioed by weight against the 100 parts of rubber and are expressed in phr. This way one can easily compare, for example, the levels of curatives or filler loadings, etc., between different compositions based on the same relative proportion of rubber without the need to recalculate percents for every component after adjusting levels of only one, or more, component(s).

"Alkyl" refers to a paraffinic hydrocarbon group which may be derived from an alkane by dropping one or more hydrogens from the formula, such as, for example, a methyl group (CH₃), or an ethyl group (CH₃CH₂), etc.

"Aryl" refers to a hydrocarbon group that forms a ring structure characteristic of aromatic compounds such as, for example, benzene, naphthalene, phenanthrene, anthracene, etc., and typically possess alternate double bonding ("unsaturation") within its structure. An aryl group is thus a group derived from an aromatic compound by dropping one or more hydrogens from the formula such as, for example, phenyl, or C₆H₅.

Substituted refers to the substitution of at least one hydrogen of the chemical compound or constituent. Thus, for example, a "substituted" styrenic unit includes *p-*methylstyrene, *p*-ethylstyrene, and so on.

As used herein, "wt.%" means weight percent, "mol.%" means mole percent, "vol.%" means volume percent, and all molecular weights are in units of g/mol, unless otherwise noted.

### Contoured DVA Innerliners

The present disclosure is directed to contoured DVA innerliners and methods for producing them, especially for tires. DVA innerliners made using current technology tend to have a substantially uniform gauge. "Substantially uniform gauge" as used herein means a gauge variation of less than 25% (preferably less than 20%, preferably less than 15%, or preferably less than 10%). Film gauge is measured according to ASTM D374-94 Method C. Film gauge variation is determined using a Measuretech Series 200 instrument. This instrument measures film thickness using a capacitance gauge. For each film sample, ten film thickness data points are measured per inch of film as the film is passed through the gauge in a transverse direction. Three film samples are used to determine the gauge variation. The gauge variation is determined by dividing the full range of film thickness (maximum minus minimum) by the average thickness, and dividing the result by two. The gauge variation is presented as a percentage change around the average.

During the tire building process, when an innerliner having a substantially uniform gauge is placed on a building drum and the drum expands torroidally, the innerliner is subjected to non-uniform stretching. The areas which experience the greatest stretch are the centerline and the shoulder areas of the tire. Accordingly, the DVA innerliner is thinner in these areas, and the final tire has a DVA innerliner having a non-uniform gauge. This non-uniform gauge may be disadvantageous. Irregular innerliner gauge in the tire may allow air to penetrate more rapidly through the region of the innerliner that is thinner. This may lead to increase in oxidation and undue aging of internal tire rubber components.

In contrast, embodiments of the present invention are related to tire innerliners comprising a dynamically vulcanized alloy of an elastomer and an engineering resin wherein the innerliner is contoured. Advantageously, the contoured DVA innerliners allow for improved air impermeability by normalizing the gauge during the non-uniform stretching that occurs throughout the tire building process, so that the cured tire comprises a DVA innerliner having a more uniform gauge. Contoured DVA barrier films or innerliners, and articles made from them, including tires, are discussed below. Methods of making these contoured articles are also discussed below.

"Contoured," as used herein, means having a non-uniform gauge. "Non-uniform," as used herein to refer to the gauge of the innerliner, means that the thickness at the thickest and thinnest parts of the innerliner differ by more than 25.0%, (preferably more than 50.0%, more than 75%, or more than 100.0%). Innerliner gauges vary depending on the size of the tire, manufacturer, and performance requirements of the tire. For example, truck liners are generally about 2.0 mm thick, and may range in thickness from about 1.8 mm to about 2.5 mm. On the other hand, passenger tires are generally about 1.0 mm thick and may range from about 0.6 to about 1.2 mm.

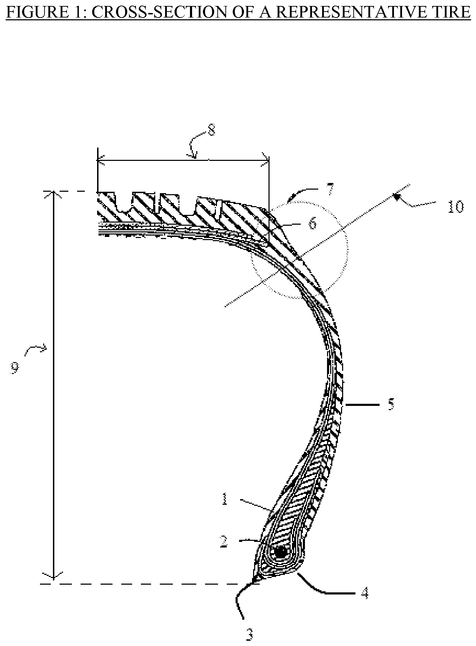

For ease of description, the contour of the tire innerliner is described relative to its position in the final tire. Figure 1 represents a cross-section of a representative tire. Of particular importance to the present invention are the innerliner (1), the bead (2), the bead toe (3), the bead heel (4), the sidewall (5), and the belt (6). Dimensions which are also relevant to the invention are the shoulder area (7), the maximum belt width (half the belt width is shown as 8), the tire height (9), and the shoulder (10). The shoulder is considered the midpoint of the shoulder area, typically found at a distance from the centerline of about 50% of the maximum belt width.

Although the contour of the innerliner is discussed relative to its final position in the tire, one of skill in the art would appreciate that the innerliner is contoured before the tire build process. For example, a thickness being within a distance of about 30.0% of the belt width on either side of the centerline means that in the contoured innerliner, before the tire build process, the thicker portion of the contour is displaced at a distance of about 30.0% of the desired belt width in the final tire, about a central point of the innerliner which will align to the centerline of the tire during the tire building process.

The contour of the inventive innerliner preferably dissipates during the tire build process to yield a tire having an innerliner that substantially lacks contour, and has substantially uniform gauge. The inventors suggest that substantially uniform innerliner gauge in the tire may help ensure minimum air permeation into the tire casing, thereby advantageously leading to better performance. An economic benefit is also achieved by being able to use one size of DVA film to build several sizes of tires. It is foreseeable that a stock contoured DVA tire innerliner may be produced, and several tire innerliner sizes derived from the stock innerliner, by stretching, as described herein.

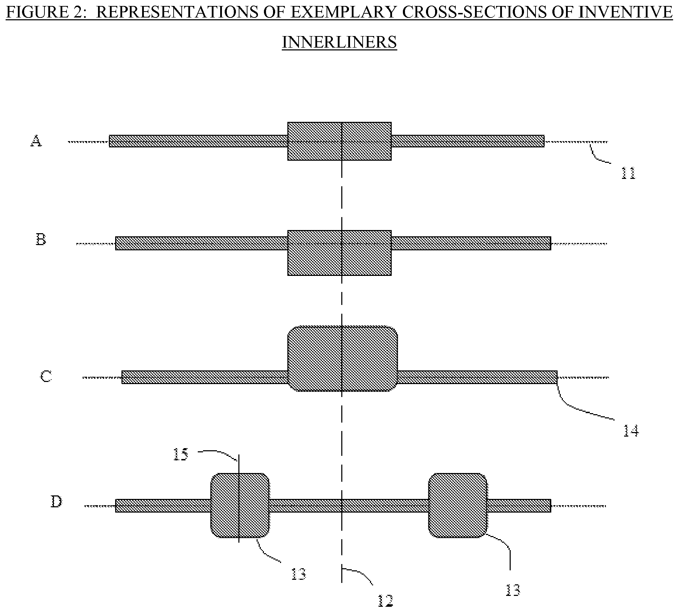

The thicker part of the contour of the innerliner may be also described as being displaced radially about the horizontal axis of the innerliner. Figure 2 is a representation of exemplary innerliner cross-sections (Structures A through D). Figure 2 is an exaggerated representation of the cross-section and is not to scale. With respect to Figure 2, the horizontal axis of the innerliner 11 is shown by a dashed line for each of structures A through D. In preferred embodiments, the thickness is displaced equally about the horizontal axis, as shown in structure A. It is also within the scope of the present invention that the thickness is displaced unequally about the horizontal axis, as shown in structures B through D. In some embodiments, the innerliner is contoured such that the edges of the contour are rounded, such as in structures C and D. One of skill in the art will appreciate that this may occur due to the natural melt flow of the DVA when forming the film. In other embodiments, the edges of the contour may be more well-defined as shown in structures A and B.

The contour of these inventive innerliners is strategically positioned so that the thicker areas of the innerliner correspond to the areas which experience greater tension and increased stretching during the tire building process. With respect to Figure 2, Structures A, B, and C, the contoured tire innerliner has a centerline 12 and opposing edges 14, wherein the tire innerliner has a gauge at the centerline that is greater than the gauge at the edge. Where the centerline is thicker than the edge, the thicker portion may extend from each side of the centerline 12 by a distance of 15.0% to 40.0% of the innerliner width; preferably within a distance of 20.0% to 40.0% of the innerliner width; preferably within a distance of 30.0% to 40.0% of the innerliner width; or most preferably within a distance of 35.0% to 40.0% of the innerliner width. In such embodiments, the contoured innerliner may have a centerline to edge gauge ratio of about 3.0:1.0, about 2.5:1.0, about 2.0:1.1, about 1.8:1.0, or about 1.5:1.0. The thickness at the edge is in the range of from about 10 to 500 µm, from about 50 to 500 µm, from 100 to 450 µm, or from 200 to 400 µm.

With further respect to Figure 2, Structure D, the shoulder area 13 of the innerliner is thicker than the centerline. In the tire, the shoulder region spans a distance, measured from the centerline, of between 40% and 60% of the maximum belt width to lap over the belt edge. In the innerliner, the central portion of the innerliner, between the thicker shoulder portions has a width of 25% to 40% of the innerliner width and each thicker shoulder portion has a width of 10% to 25% of the innerliner width. Where the shoulder area is thicker than the centerline, the thicker portion is measured from the midpoint of the shoulder area. Preferably, the midpoint of the shoulder area is thicker than the centerline. The shoulder area midpoint is shown as 10 in Figure 1, and as 15 in Figure 2. The shoulder area midpoint also approximates to about a quarter of the tire height, measured from the thread region down towards the edge. Alternatively, the shoulder area may be considered the region of the innerliner disposed vertically above the outboard end of the tire tread footprint, when the tire is mounted, inflated, and installed on a vehicle under loaded conditions. Tire tread footprint refers to the full tire-pavement contact area, when the vehicle is at rest. The outboard end refers to the lateral sides (as opposed to the circumferential sides) of the footprint.

In some embodiments, the thicker portion is located within a distance of 15% of the total length of the shoulder area, on either side of the shoulder area midpoint (preferably within a distance of 20% of the total length of the shoulder area, within a distance of 30.0% of the total length of the shoulder, or within a distance of 40.0% of the total length of the shoulder area, all measured on either side of the shoulder area midpoint). In such embodiments, the contoured innerliner may have a shoulder area to centerline gauge ratio of about 3.0:1.0, about 2.5:1.0, about 2.0:1.1, about 1.8:1.0, or about 1.5:1.0.

The inventors propose that where these contoured DVA innerliners are used to build a tire, the final tire will advantageously have a DVA innerliner with a substantially uniform gauge from bead to bead. Such tires are expected to have improved impermeability properties, and maintained or improved mechanical properties over tires having conventional fully elastomeric innerliners.

Innerliners of the present invention comprise a dynamically vulcanized alloy of an elastomer and an engineering resin. The elastomer and the engineering resin components, as well as the DVAs are discussed below. Compatibilizers such as secondary elastomers, and additives such as fillers, clays, and process oils are also discussed below.

In certain embodiments, the DVA comprises the elastomer and the engineering resin in a weight ratio of elastomer to resin of 55:45 to 80:20; preferably 60:40 to 75:25; or more preferably 65:35 to 75:25.

### Elastomer

The engineering resin typically forms a continuous matrix in the DVA and provides the DVA with impermeability characteristics while the elastomers provide flexibility. Almost any elastomer known to be useful in tires may be used in the DVA. For enhanced impermeability exceptionally useful elastomeric compositions for this invention comprise a mixture of monomers, the mixture having at least (1) a C₄ to C₇ isoolefin monomer component with (2) a multiolefin, monomer component. The isoolefin is present in a range from 70 to 99.5 wt.% by weight of the total monomers in one embodiment, and 85 to 99.5 wt.% in another embodiment. The multiolefin component is present in amounts in the range of from 30 to about 0.5 wt.% in one embodiment and from 15 to 0.5 wt.% in another embodiment. In yet another embodiment, from 8 to 0.5 wt.% of the monomer mixture is multiolefin.

The isoolefin is a C₄ to C₇ compound, non-limiting examples of which are compounds such as isobutylene, isobutene, 2-methyl-1-butene, 3-methyl-1-butene, 2-methyl-2-butene, 1-butene, 2-butene, methyl vinyl ether, indene, vinyltrimethylsilane, hexene, and 4-methyl-1-pentene. The multiolefin is a C₄ to C₁₄ multiolefin such as isoprene, butadiene, 2,3-dimethyl-1,3-butadiene, myrcene, 6,6-dimethyl-fulvene, hexadiene, cyclopentadiene, and piperylene. Other polymerizable monomers, such as styrene and dichlorostyrene, are also suitable for homopolymerization or copolymerization in butyl rubbers.

An example of an elastomer is so called butyl rubber, or butyl elastomer comprising isobutylene monomers and isoprene monomers. The butyl elastomer may be halogenated. Halogenation can be carried out by any means and is not herein limited by the halogenation process. In one embodiment, the butyl elastomer is halogenated in hexane diluent at from 4 to 60°C using bromine (Br₂) or chlorine (Cl₂) as the halogenation agent. Commercial embodiments of a halogenated butyl elastomer include, but are not limited to, Bromobutyl 2222 and Bromobutyl 2255 (ExxonMobil Chemical Company).

Another useful embodiment of halogenated butyl elastomer is halogenated, branched or "star-branched" butyl elastomer. In one embodiment, the star-branched butyl elastomer ("SBB") is a composition comprising butyl elastomer and a polydiene or block copolymer. The polydienes, block copolymer, or branching agents (hereinafter "polydienes"), are typically cationically reactive and are present during the polymerization of the butyl or halogenated butyl elastomer, or can be blended with the butyl elastomer to form the SBB. The branching agent or polydiene can be any suitable branching agent. Preferably the branched or "star-branched" butyl elastomer used herein is halogenated ("HSBB"). The polydiene/block copolymer, or branching agents (hereinafter "polydienes"), are typically cationically reactive and are present during the polymerization of the butyl or halogenated butyl elastomer, or can be blended with the butyl or halogenated butyl elastomer to form the HSBB. A commercial embodiment of HSBB is Bromobutyl 6222 (ExxonMobil Chemical Company).

The elastomer may also include functionalized interpolymers wherein at least some of the alkyl substituent groups present on the styrene monomer units contain benzylic halogen, such as brominated styrene or brominated alkylstyrene groups, or another functional group described further below. Desirable styrenic monomers in the isoolefin copolymer include styrene, methylstyrene, chlorostyrene, methoxystyrene, indene and indene derivatives, and combinations thereof. In a particular embodiment, the elastomer is stryenic interpolymer. The interpolymer may be random elastomeric copolymers of a C₄ to C₇ isomonoolefins, such as isobutylene and a para-alkylstyrene comonomer, such as para-methylstyrene, containing at least 80%, more alternatively at least 90% by weight of the para-isomer and optionally include functionalized interpolymers wherein at least one or more of the alkyl substituents groups present in the styrene monomer units contain benzylic halogen or some other functional group. These may be referred to as functionalized poly(isobutylene-co-alkylstyrene) ("FIMS"), having functional groups as described herein.

Preferred elastomers useful in the practice of this invention include isobutylene-based copolymers. As stated above, an isobutylene based elastomer or a polymer refers to an elastomer or a polymer comprising at least 70 mol.% repeat units from isobutylene and at least one other polymerizable unit. The isobutylene-based copolymer may or may not be halogenated.

In one embodiment of the invention, the elastomer is a butyl-type rubber or branched butyl-type rubber, especially halogenated versions of these elastomers. Useful elastomers are unsaturated butyl rubbers such as copolymers of olefins or isoolefins and multiolefins. Non-limiting examples of unsaturated elastomers useful in the method and composition of the present invention are poly(isobutylene-co-isoprene), polyisoprene, polybutadiene, polyisobutylene, poly(styrene-co-butadiene), natural rubber, star-branched butyl rubber, and mixtures thereof. Useful elastomers in the present invention can be made by any suitable means known in the art, and the invention is not herein limited by the method of producing the elastomer.

One embodiment of the butyl rubber polymer of the invention is obtained by reacting 95 to 99.5 wt.% of isobutylene with 0.5 to 8 wt.% isoprene, or from 0.5 to 5.0 wt.% isoprene, in yet another embodiment.

Elastomeric compositions of the present invention may also comprise at least one random copolymer comprising a C₄ to C₇ isomonoolefins, such as isobutylene, and an alkylstyrene comonomer, such as para-methylstyrene, containing at least 80%, more alternatively at least 90% by weight of the para-isomer and optionally include functionalized interpolymers wherein at least one or more of the alkyl substituents groups present in the styrene monomer units contain benzylic halogen or some other functional group. In another embodiment, the polymer may be a random elastomeric copolymer of a C₄ to C₆ α-olefin and an alkylstyrene comonomer, such as para-methylstyrene containing at least 80%, alternatively at least 90% by weight of the para-isomer and optionally include functionalized interpolymers wherein at least one or more of the alkyl substituents groups present in the styrene monomer units contain benzylic halogen or some other functional group. Exemplary materials may be characterized as polymers containing the following monomer units randomly spaced along the polymer chain: 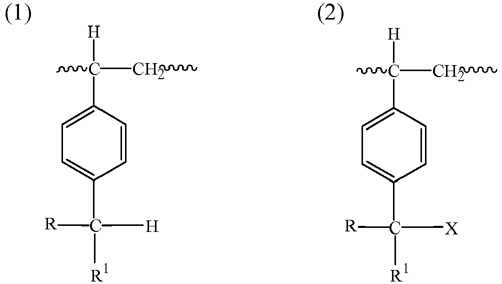 wherein R and R¹ are independently hydrogen, lower alkyl, such as a C₁ to C₇ alkyl and primary or secondary alkyl halides and X is a functional group such as halogen. In an embodiment, R and R¹ are each hydrogen. Up to 60 mol.% of the para-substituted styrene present in the random polymer structure may be the functionalized structure (2) above in one embodiment, and in another embodiment from 0.1 to 5 mol.%. In yet another embodiment, the amount of functionalized structure (2) is from 0.2 to 3 mol.%.

The functional group X may be halogen or some other functional group which may be incorporated by nucleophilic substitution of benzylic halogen with other groups such as carboxylic acids; carboxy salts; carboxy esters, amides, and imides; hydroxy; alkoxide; phenoxide; thiolate; thioether; xanthate; cyanide; cyanate; amino; and mixtures thereof. These functionalized isomonoolefin copolymers, their method of preparation, methods of functionalization, and cure, are more particularly disclosed in U.S. Patent No. 5,162,445.

In another embodiment, the functionality is selected such that it can react or form polar bonds with functional groups present in the matrix polymer of a desirable composition, for example, acid, amino or hydroxyl functional groups, when the polymer components are mixed at high temperatures. In a particular embodiment, the elastomer is halogenated poly(isobutylene-*co*-*p*-methylstyrene), and in a more particular embodiment, is brominated poly(isobutylene-*co*-*p*-methylstyrene) ("BIMS").

In an embodiment, the elastomer comprises random polymers of isobutylene and 0.5 to 20 mol.% para-methylstyrene wherein up to 60 mol.% of the methyl substituent groups present on the benzyl ring is functionalized with a halogen such as bromine or chlorine (para-(bromomethylstyrene)), an acid, or an ester.

In another embodiment, the functionality is selected such that it can react or form polar bonds with functional groups present in the matrix polymer, for example, acid, amino or hydroxyl functional groups, when the polymer components are mixed at high temperatures.

In one embodiment, brominated poly(isobutylene-*co*-*p*-methylstyrene) "BIMSM" polymers generally contain from 0.1 to 5 mol.% of bromomethylstyrene groups relative to the total amount of monomer derived units in the copolymer. In another embodiment, the amount of bromomethyl groups is from 0.2 to 3.0 mol.%, and from 0.3 to 2.8 mol.% in yet another embodiment, and from 0.4 to 2.5 mol.% in yet another embodiment, and from 0.3 to 2.0 mol.% in yet another embodiment, wherein a desirable range may be any combination of any upper limit with any lower limit. Expressed another way, exemplary copolymers contain from 0.2 to 10 wt.% of bromine, based on the weight of the polymer, from 0.4 to 6 wt.% bromine in another embodiment, and from 0.6 to 5.6 wt.% in another embodiment, are substantially free of ring halogen or halogen in the polymer backbone chain. In one embodiment, the random polymer is a copolymer of C₄ to C₇ isoolefin derived units (or isomonoolefin), para-methylstyrene derived units, and para-(halomethylstyrene) derived units, wherein the para-(halomethylstyrene) units are present in the polymer from 0.4 to 3.0 mol.% based on the total number of para-methylstyrene, and wherein the para-methylstyrene derived units are present from 3 to 15 wt.% based on the total weight of the polymer in one embodiment, and from 4 to 10 wt.% in another embodiment. In another embodiment, the para-(halomethylstyrene) is para-(bromomethylstyrene).

Other C₄ to C₇ isoolefin derived unit containing elastomers suitable for use in the present invention include terpolymers comprising the isoolefin and two multiolefins wherein the multiolefins have different backbone structures prior to polymerization. Such terpolymers include both block and random terpolymers of C₄ to C₈ isoolefin derived units, C₄ to C₁₄ multiolefin derived units, and alkylstyrene derived units. Such terpolymers may be formed from isobutylene, isoprene, and alkylstyrene, preferably methylstyrene, monomers. Another suitable terpolymer may be polymerized from isobutylene, cyclopentadiene, and alkylstyrene monomers. Such terpolymers are obtained under cationic polymerization conditions.

### Engineering Resin

Useful thermoplastic or engineering resin (those terms are used interchangeably) is defined to be any thermoplastic polymer, copolymer or mixture thereof having a Young's modulus of more than 500 MPa, and, optionally, a melting point of 170°C to 270°C, including, but not limited to, one or more of the following: a) polyamide resins: Nylon 6 (N6), Nylon 66 (N66), Nylon 46 (N46), Nylon 11 (N11), Nylon 12 (N12), Nylon 610 (N610), Nylon 612 (N612), Nylon 6/66 copolymer (N6/66), Nylon 6/66/610 (N6/66/610), Nylon MXD6 (MXD6), Nylon 6T (N6T), Nylon 6/6T copolymer, Nylon 66/PP copolymer, Nylon 66/PPS copolymer; b) polyester resins: polybutylene terephthalate (PBT), polyethylene terephthalate (PET), polyethylene isophthalate (PEI), PET/PEI copolymer, polyacrylate (PAR), polybutylene naphthalate (PBN), liquid crystal polyester, polyoxalkylene diimide diacid/polybutyrate terephthalate copolymer and other aromatic polyesters; c) polynitrile resins: polyacrylonitrile (PAN), polymethacrylonitrile, acrylonitrile-styrene copolymers (AS), methacrylonitrile-styrene copolymers, methacrylonitrile-styrene-butadiene copolymers; d) polymethacrylate resins: polymethyl methacrylate, polyethylacrylate; e) polyvinyl resins: vinyl acetate (EVA), polyvinyl alcohol (PVA), vinyl alcohol/ethylene copolymer (EVOA), ethylene/vinyl alcohol copolymer (EVOH), polyvinylidene chloride (PVDC), polyvinyl chloride (PVC), polyvinyl/polyvinylidene copolymer, polyvinylidene chloride /methacrylate copolymer; f) cellulose resins: cellulose acetate, cellulose acetate butyrate; g) fluorine resins: polyvinylidene fluoride (PVDF), polyvinyl fluoride (PVF), polychlorofluoroethylene (PCTFE), tetrafluoroethylene/ethylene copolymer (ETFE); h) aromatic polyimides; i) polysulfones; j) polyacetals; k) polyactones; 1) polyphenylene oxide and polyphenylene sulfide; m) styrene-maleic anhydride; n) aromatic polyketones; and o) mixtures of any and all of a) through n) inclusive as well as mixtures of any of the illustrative or exemplified engineering resins within each of a) through n) inclusive. For purposes of the present disclosure, this definition of engineering resin excludes polymers of olefins, such as polyethylene and polypropylene. Preferred engineering resins include polyamide resins and mixtures thereof; particularly preferred resins include Nylon 6, Nylon 6/66 copolymer, Nylon 11, Nylon 12, Nylon 610, Nylon 612 and their blends.

### Secondary Elastomers

Other elastomers (or "secondary elastomer") can be used in combination with the halogenated isobutylene-based elastomer. Generally, the secondary elastomers useful in the contoured tire innerliners include, for example natural elastomer (NR), high diene elastomers, isoprene elastomer (IR), epoxylated natural elastomer, styrene butadiene elastomer (SBR), polybutadiene elastomer (BR) (including high cis-BR and low cis-BR), nitrile butadiene elastomer (NBR), hydrogenated NBR, hydrogenated SBR, olefin elastomers (for example, ethylene propylene elastomers (including both EPDM and EPM), maleic acid-modified ethylene propylene elastomers (M-EPM), butyl elastomer (IIR), isobutylene and aromatic vinyl or diene monomer copolymers, acrylic elastomers (ACM), ionomers, other halogen-containing elastomers (for example, chloroprene elastomers (CR), hydrin elastomers (CHR), chlorosulfonated polyethylenes (CSM), chlorinated polyethylenes (CM), maleic acid-modified chlorinated polyethylenes (M-CM), silicone elastomers (for example, methylvinyl silicone elastomers, dimethyl silicone elastomers, methylphenylvinyl silicone elastomers), sulfur-containing elastomers (for example, polysulfide elastomers), fluoro elastomers (for example, vinylidene fluoride elastomers, fluorine-containing vinyl ether-based elastomers, tetrafluoroethylene-propylene elastomers, fluorine-containing silicone elastomers, fluorine-containing phosphagen elastomers), thermoplastic elastomers (for example, styrene-containing elastomers, olefin elastomers, ester elastomers, urethane elastomers, or polyamide elastomers), and their mixtures.

A secondary elastomer, dispersed in the thermoplastic matrix in the form of small particles, as noted, can optionally be cured, crosslinked or vulcanized, partially, substantially or fully, as described with regard to the isobutylene-based elastomer or halogenated isobutylene-based elastomer. Such crosslinking can be accomplished in the course of dispersing the secondary elastomer in the polyamide matrix by using the same dynamic vulcanization method applied to the halogenated elastomer component.

Other compatibilizers include copolymers such as those having the structure of both or one of the thermoplastic resin and elastomer polymer or a structure of a copolymer having an epoxy group, carbonyl group, halogen group, amine group, maleated group, oxazoline group, hydroxy group, etc. capable of reacting with the thermoplastic resin or elastomer polymer. The secondary elastomer can be selected based upon the type of the thermoplastic resin polymer and elastomer polymer to be mixed. Useful secondary elastomers are selected from the group consisting of maleic anhydride grafted elastomers such as maleic anhydride grafted ABS (acrylonitrile-butadiene-styrene), EPDM (ethylene-propylene-diene elastomer), SEBS (styrene- ethylene/butadiene-styrene), and the like and maleated ethylene copolymer elastomers such as maleated ethylene-propylene (EPM), ethylene-butene, ethylene-hexene, ethylene-octene, ethylene-decene, ethylene-propylene-diene (EPDM), ethylene-vinyl acetate, ethylene-methyl acrylate, ethylene-ethyl acrylate, ethylene-acrylic acid, and the like and mixtures thereof. Also potentially useful elastomers include EPDM/styrene, EPDM/acrylonitrile graft copolymer and their maleic acid-modified forms; styrene/maleic acid copolymer; reactive phenoxy thermoplastic resin; and their mixtures.

When present, the amount of the secondary elastomer-functionalized or not-is typically less than 20 wt.%; preferably less than 10 wt.%; generally 0.5 wt.% to 20 wt.%; for example 5 wt.% to 15 wt.%; such as 7.5 wt.% to 12.5 wt.%.

### Additives

The compositions described herein may have one or more filler components such as calcium carbonate, clay, mica, silica and silicates, talc, titanium dioxide, starch and other organic fillers such as wood flour, and carbon black. Suitable filler materials include carbon black such as channel black, furnace black, thermal black, acetylene black, lamp black, modified carbon black such as silica treated or silica coated carbon black, and the like. Reinforcing grade carbon black is preferred. The filler may also include other reinforcing or non-reinforcing materials such as silica, clay, calcium carbonate, talc, titanium dioxide and the like. The filler may be present at a level of from 0 to 30 wt.% of the elastomer present in the composition.

Exfoliated, intercalated, or dispersed clays may also be present in the composition. These clays, also referred to as "nanoclays", are well known. Swellable layered clay materials suitable for the purposes of the present disclosure include natural or synthetic phyllosilicates, particularly smectic clays such as montmorillonite, nontronite, beidellite, volkonskoite, laponite, hectorite, saponite, sauconite, magadite, kenyaite, stevensite and the like, as well as vermiculite, halloysite, aluminate oxides, hydrotalcite and the like. These layered clays generally comprise particles containing a plurality of silicate platelets having a thickness typically 4 to 20 Å in one embodiment, and 8 to 12 Å in another embodiment, bound together and containing exchangeable cations such as Na⁺, Ca⁺², K⁺ or Mg⁺² present at the interlayer surfaces.

Layered clay may be intercalated and exfoliated by treatment with organic molecules (swelling agents) capable of undergoing ion exchange reactions with the cations present at the interlayer surfaces of the layered silicate. Suitable swelling agents include cationic surfactants such as ammonium, alkylamines or alkylammonium (primary, secondary, tertiary and quaternary), phosphonium or sulfonium derivatives of aliphatic, aromatic or arylaliphatic amines, phosphines and sulfides.

When present, the amount of exfoliated, intercalated, or dispersed clay incorporated in the compositions described herein is an amount sufficient to develop an improvement in the mechanical properties or barrier properties of the composition, for example tensile strength or air/oxygen impermeability. Amounts typically can be from 0.5 to 15 wt.% in one embodiment, or 1 to 10 wt.% in another embodiment, and 1 to 5 wt.% in yet another embodiment, based on the polymer content of the composition.

As used herein, the term "process oil" means both the petroleum derived process oils and synthetic plasticizers. A process or plasticizer oil may be present in air barrier compositions. Such oils are primarily used to improve the processing of the composition during preparation of the layer, for example, mixing, calendering, etc. Suitable plasticizer oils, particularly for the elastomer component(s), include aliphatic acid esters or hydrocarbon plasticizer oils such as paraffinic or naphthenic petroleum oils. The preferred plasticizer oil for use in standard, non-DVA, non-engineering resin-containing innerliner compositions is a paraffinic petroleum oil; suitable hydrocarbon plasticizer oils for use in such innerliners include oils having the following general characteristics.

Generally, the process oil may be selected from paraffinic oils, aromatic oils, naphthenic oils, and polybutene oils. Polybutene process oil is a low molecular weight (less than 15,000 Mn) homopolymer or copolymer of olefin-derived units having from 3 to 8 carbon atoms, more preferably 4 to 6 carbon atoms. In another embodiment, the polybutene oil is a homopolymer or copolymer of a C4 raffinate. Rubber process oils also have ASTM designations depending on whether they fall into the class of paraffinic, naphthenic or aromatic hydrocarbonaceous process oils. The type of process oil utilized will be that customarily used in conjunction with a type of elastomer component and a skilled elastomer chemist will recognize which type of oil should be utilized with a particular elastomer in a particular application. For a thermoplastic elastomer composition the oil may be present at a level of 0 or 0.5 or 1 wt.% to 20 or 40 wt.% of the total composition; preferably oil is not included in order to maximize impermeability of the composition.

In some embodiments, compatibilizers such as those described in U.S.S.N. 12/548,797, filed on August 27, 2009, preferably polyisobutylene succinic anhydride (PIBSA) elastomers, may be used.

### Dynamically Vulcanized Alloys

At least one of any of the above elastomers and at least one of any of the above engineering resins are blended to form a dynamically vulcanized alloy. The term "dynamic vulcanization" is used herein to connote a vulcanization process in which the vulcanizable elastomer is vulcanized in the presence of a thermoplastic under conditions of high shear and elevated temperature. As a result, the vulcanizable elastomer is simultaneously crosslinked and preferably becomes dispersed as fine sub micron size particles of a "micro gel" within the thermoplastic matrix. The elastomer has a small particle size where the number average equivalent domain diameter ranges from 0.1 to 1 micron. The resulting material is often referred to as a dynamically vulcanized alloy ("DVA").

Dynamic vulcanization is effected by mixing the ingredients at a temperature which is sufficiently high to cure the elastomer to a high degree within the residence time of the DVA manufacturing equipment and also above the melt temperature of the thermoplastic component, in equipment such as roll mills, Banbury™ mixers, continuous mixers, kneaders or mixing extruders, e.g., twin screw extruders. Typical DVA mixing temperatures are in the range of 200°C to 270°C, or higher depending on the material components. The unique characteristic of the dynamically cured compositions is that, notwithstanding the fact that the elastomer component may be cured, the compositions can be processed and reprocessed by conventional thermoplastic processing techniques such as extrusion, injection molding, compression molding, etc. Scrap or flashing can also be salvaged and reprocessed; those skilled in the art will appreciate that conventional elastomeric thermoset scrap, comprising only elastomer polymers, cannot readily be reprocessed due to the cross-linking characteristics of the vulcanized polymer.

The thermoplastic may be present in an amount ranging from about 10 to 98 wt.% based on the polymer blend, alternatively, the thermoplastic is present in an amount within any one of the ranges of 20 to 95 wt.%, 30 to 70 wt.%, or 40 to 60 wt.%.

The elastomer may be present in the composition in a weight amount, based on the thermoplastic/elastomer blend, of up to 90 wt.% in one embodiment, up to 70 wt.% in another embodiment, up to 60 wt.% in another embodiment, and up to 40 wt.% in yet another embodiment. In yet other embodiments, any of which may be combined with any of the above maximum weight percentages, the elastomer may be present in at least 2 wt.%, at least 10 wt.% in another embodiment, and at least 20 wt.% in yet another embodiment, and at least 35 wt.% in yet another embodiment.

In preparing the DVA, additives and vulcanizing agents may be blended with either the elastomer or the thermoplastic, before the elastomer and the thermoplastic are combined in the blender or added to the mixer during, or after the thermoplastic and elastomer have already been introduced to each other. These other materials may be added to assist with preparation of the DVA or to provide desired physical properties to the DVA. Such additional materials include, but are not limited to, curatives, compatibilizers, extenders, and plasticizers. With reference to the elastomers of the disclosed invention, "vulcanized," or "cured" refers to the chemical reaction that forms bonds or cross-links between the polymer chains of the elastomer.

In certain embodiments, a plasticizer is combined with the elastomer and thermoplastic blend. Suitable plasticizers include those sold under various trademarks including Sunmide™ (Sanwa Chemical Industry Co., Ltd., Kanagawa, Japan) and Uni-Rez™ (Arizona Chemical, Jacksonville, FL.). Such materials typically have a molecular weight of less than 20,000 Daltons; such as 1,000 to 18,000 Daltons; preferably 3,000 to 17,000 Daltons and have flash points greater than 250°C, brittleness temperatures of less than -20°C, and softening temperature of less than bout 180°C.

Exemplary plasticizers can be selected from the group consisting of phthalate plasticizers, adipate plasticizers, phosphate plasticizers, glycolate plasticizers, sulfonamide plasticizers, trimellitate plasticizers and polymeric plasticizers, particularly low molecular weight Nylons. Preferred plasticizers are selected from the group consisting of phthalate plasticizers, adipate plasticizers, and sulfonamide plasticizers. Examples of suitable plasticizers include dibutyl phthalate, dicyclohexyl phthalate, diethyl phthalate, diisodecyl phthalate, dimethyl phthalate, di(2-ethylhexyl) phthalate, diphenyl phthalate, diundecyl phthalate, mixed dialkyl phthalate, butyl benzyl phthalate, benzyl phthalate, di(2-ethylhexyl) adipate, mixed dialkyl adipate, tributoxyethyl phosphate, tributyl phosphate, tricresyl phosphate, triphenyl phosphate, cresyl diphenyl phosphate, 2-ethylhexyl diphenyl phosphate, isodecyl diphenyl phosphate, butyl phthalyl butyl glycolate, methyl phthalyl ethyl glycolate and mixed alkyl trimellitate. Sulfonamide plasticizers, such as alkyl or aryl sulfonamides, comprise a preferred class of plasticizers for polyamides, including for example, N-butyl benzyl sulfonamide, N-cyclohexyl-p- toluene sulfonamide, o,p-toluenesulfonamide, N-ethyl-o,p-toluenesulfonamide and N-ethyl-o-toluenesulfonamide.

The vulcanization agent(s), with or without the use of at least one accelerator, is often referred to in the art as a vulcanization "system" for the elastomer(s). A vulcanization system is used because typically more than one vulcanization agent is employed for beneficial effects, particularly where a mixture of high diene elastomer and a less reactive elastomer is used.

Crosslinking or vulcanizing agents include at least one of, e.g., sulfur, zinc oxide, and fatty acids and mixtures thereof. Generally, polymer compositions may be crosslinked by adding curative agents, for example sulfur, metal oxides (i.e., zinc oxide, ZnO), organometallic compounds, radical initiators, etc., and heating the composition or mixture. The following are common curatives that can function in the present invention: ZnO; CaO; MgO; Al₂O₃. CrO₃; FeO; Fe₂O₃ and; NiO. These metal oxides can be used in conjunction with the corresponding metal stearate complex (e.g., the stearate salts of Zn, Ca, Mg, and Al), or with stearic acid, and either a sulfur compound or an alkylperoxide compound. Suitable curative systems for the elastomeric halogenated copolymer component of the present invention include zinc oxide in combination with zinc stearate or stearic acid and, optionally, one or more of accelerators or vulcanizing agents. Peroxide curatives are specifically excluded from the thermoplastic elastomer in an embodiment when there is present one or more thermoplastic resins that would cause such the resins to crosslink themselves in the presence of peroxide, resulting in an excessively cured, non-thermoplastic composition.

Vulcanization accelerators include amines, guanidines, thioureas, thiazoles, thiurams, sulfenamides, sulfenimides, thiocarbamates, xanthates, and the like. Acceleration of the cure process may be accomplished by adding to the composition an amount of the accelerant. The mechanism for accelerated vulcanization of rubber involves complex interactions between the curative, accelerator, activators and polymers. Ideally, the entire available curative is consumed in the formation of effective crosslinks which join individual polymer chains to one another and enhance the overall strength of the polymer matrix. Numerous accelerators are known in the art. Vulcanizing agents, accelerators and the vulcanization systems of which they are a part that are useful with one or more crosslinkable polymers are well-known in the art.

The vulcanization system can be dispersed in a suitable concentration into the rubber component, the rubber component optionally containing one or more filler, extender and/or plasticizer by, e.g., mixing the rubber and the cure system components in a process step prior to addition of the rubber-containing composition to the thermoplastic using any mixing equipment commonly used in the rubber industry for such purpose, e.g., a two-roll rubber mill, a Banbury mixer, a mixing extruder and the like. Such mixing is commonly referred to as "accelerating" the rubber composition. Alternatively, the rubber composition can be accelerated in a stage of a mixing extruder prior to carrying out dynamic vulcanization, although this is difficult to control in a commercial, practical, integrated process and is less desirable. It is particularly preferred that the vulcanization system be dispersed in the rubber phase, or in a rubber composition also optionally including one or more fillers, extenders and other common ingredients for the intended end-use application, prior to the addition of the rubber to the thermoplastic resin(s) in the mixing equipment in which it is intended to carry out dynamic vulcanization. By so doing, the precompounded rubber composition can be pelletized for more efficient and effective feeding to the dynamic vulcanization equipment, preferably a mixing extruder, as described below.

Furthermore, the properties of the vulcanization system can be adapted to the mixing process so that the conditions of the desired tire innerliners can be met. For example, to determine the vulcanization response of the particular elastomer(s) present in a composition, the elastomer(s) and cure system can be combined by means known to those skilled in the art, for example, on a two-roll mill, Banbury mixer or mixing extruder. A sample of the mixture, often referred to as the "accelerated" compound, can be vulcanized under static conditions, such as in the form of a thin sheet using a mold that is subjected to heat and pressure in a press. Samples of the accelerated, thin sheets, vulcanized for progressively longer times and/or at higher temperatures, are then tested for stress strain properties and/or crosslink density to determine the state of vulcanization (described in detail in American Society for Testing and Materials, Standard ASTM D412).

Alternatively, the accelerated compound can be tested for state of vulcanization using an oscillating disc cure rheometer test (described in detail in American Society for Testing and Materials, Standard ASTM D2084). Thereafter the overall time and temperature of the dynamic vulcanization process can be adjusted so that the vulcanizable elastomers present in the composition are sufficiently cured to achieve the desired properties of the thermoplastic composition of which they are a part, for example, an air or fluid retention barrier such as an innerliner for a tire.

It will be appreciated that the vulcanizable elastomer, for example the halogenated isobutylene elastomer such as FIMS or BIMS (or a mixture of such elastomers), will be vulcanized to at least 50% of the maximum state of vulcanization (a "partial" cure) of which it is capable based on the vulcanization system, time and temperature, and typically, the state of vulcanization of such elastomer will exceed 50% of maximum cure. Since the second elastomer can also comprise a vulcanizable elastomer, where such second elastomer is vulcanized, for example according to dynamic vulcanization technology as described herein, it too typically will be vulcanized to at least 50% of the maximum state of vulcanization of which it is capable based on its vulcanization agent or vulcanization system and the time and temperature at which it is processed. The two elastomers may be differentially vulcanized as well. In any case, an elastomer is only partially vulcanized if the vulcanization state is less than 90 or 80 or 70 or 60 or 50%. Alternatively, as discussed herein, such second elastomer can also be grafted, linked and/or associated with the polyamide resin, with or without the use of curatives, so that its state of vulcanization is not a limitation, provided that it is sufficiently dispersed in a small enough particle size so as to provide the properties desired for the use to which the composition will be put.

The vulcanization system can be dispersed in a suitable concentration into the elastomer component, the elastomer component optionally containing one or more filler, extender and/or plasticizer by, for example, mixing the elastomer and the vulcanization system components in a process step prior to addition of the elastomer-containing composition to the thermoplastic using any mixing equipment commonly used in the elastomer industry for such purpose, for example, a two-roll elastomer mill, a Banbury mixer, a mixing extruder and the like. Such mixing is commonly referred to as "accelerating" the elastomer composition. In one embodiment, at least one vulcanization agent is typically present at 0.1 to 15 phr; alternatively at 0.5 to 10 phr. Vulcanizing agents and accelerators can be combined as is well known in the art.

The preferred polymer components comprise halogenated isobutylene-containing copolymers as the vulcanizable component(s), for example, halogenated butyl such as chlorinated butyl or brominated butyl, and brominated poly(isobutylene-co-p-methylstyrene) (BIMS copolymer), and a thermoplastic polymer such as Nylon or a blend of various Nylon polymers. It is particularly preferred that the dynamically vulcanized compositions described herein comprise the halogenated elastomer component(s) in the form of dispersed, partially or fully cured, small particles in a continuous matrix of engineering resin.

### Methods of Making Contoured DVA Innerliners

Embodiments herein relate to a method of making a tire innerliner comprising: providing a contoured tire innerliner wherein the contoured tire innerliner comprises a dynamically vulcanized alloy of an elastomer and an engineering resin. In some embodiments, the contoured tire innerliner has a gauge at the centerline of the contoured tire innerliner that is greater than the gauge at the bead edge. In other embodiments, the contoured tire innerliner has a gauge at the shoulder meridian of the contoured tire innerliner that is greater than the gauge at the centerline.

In embodiments herein, the contoured DVA innerliners can be derived from films having any desirable geometry and form, such as linear, flat, elongated, tubular, tapered, oblong, and combinations thereof. The innerliner may comprise a continuous tube or "sleeve" or is derived from a sheet.

The contoured tire innerliner can be formed into an innerliner by any means known in the art. For example, the DVA may be extruded, calendered, or formed into a sheet, film, or tube. In particular embodiments, blown film may be subsequently cut into a sheet. The sheet or tubular molded article thus obtained can be effectively used for an innerliner layer of a pneumatic tire or the hose tube or hose cover of a low gas permeable hose. Furthermore, the low permeability characteristics of the composition are suitable for uses with fluids other than gasses, for example, liquids such as water, hydraulic fluid, brake fluid, heat transfer fluid, etc., provided that the layer in direct contact with the fluid has suitable resistance to the fluid being handled.

The contouring step, also known as "gauge profiling" may occur via extrusion and calendaring. In such embodiments, the contoured tire innerliner comprises a contoured sheet. In particular embodiments, the contoured sheet comprises a cast film.

The contouring step may also occur due to non-uniform stretching of the DVA film. In such embodiments, the contoured tire innerliner comprises a non-uniformly stretched sleeve. The non-uniformly stretched sleeve may be made by: (i) providing a seamless tire innerliner, having a substantially uniform gauge, the seamless tire innerliner being in the form of a sleeve, wherein the seamless pneumatic innerliner comprises a dynamically vulcanized alloy of an elastomer and an engineering resin; (ii) subjecting the seamless tire innerliner to non-uniform stretching in at least one of the radial and axial directions; and (iii) producing a contoured tire innerliner that comprises a non-uniformly stretched sleeve.

In some embodiments, the non-uniform stretching occurs on at least one heatable, expandable tire building drum. The heatable expandable drum may be of the type typically used in tire building, which is capable of expansion in at least one of the radial and axial directions. In some embodiments, the heatable expandable drum is heated. In other embodiments, the heatable expandable drum is expanded in at least one of the radial and axial directions. In yet other embodiments, the heatable expandable drum is heated and expanded in at least one of the radial and axial directions. Tire building drums of the kind described in U.S. Patent No.s 7,144,467; 6,863,106; and 6,769,468 may be useful herein.

In some embodiments, the non-uniform stretching occurs on more than one drum. For example, the sleeve may be stretched in the radial direction on one heated drum, and then stretched in the axial direction on other drum.

In some embodiments, the heatable drum is heated to a temperature in the range of from about 170 to 230°C (preferably 180 to 220°C, 190 to 210°C, or 190 to 200°C). The drum is heated until the film achieves the desired temperature, preferably for a time of 30 seconds or less (preferably 20 seconds or less, 10 seconds or less, 5 seconds or less, or 1 second or less) without breaking or otherwise damaging the integrity of the film.

The heated film may then be stretched at extensional rates of 0.01 second⁻¹ or greater, 0.10 second⁻¹ or greater, or 1.00 second⁻¹ or greater. The film is deformed to a total strain of less than 500%, preferably less than 400%, preferably less than 300%, less than 200%, less than 100%, in the radial direction and/or the axial direction.

In certain embodiments, after heating the innerliner is desirably allowed to cool to below 200 or 180 or 160 or 140 or 120 or 100 or 80°C, wherein the contoured tire innerliner can be rolled for transport, storage, or can be conveyed to the same or different heating means and the heating step repeated. The heating step can be only one step, or two or three or four or more heating steps.

Desirably, the permeation coefficient of the tire made from the contoured innerliner is less than 60 or 50 or 40 cc*mm/m²-day. In another embodiment, the tire made from the contoured innerliner have a permeation coefficient of less than 0.08 or 0.015 or 0.05 cc*mm/m²-day·mmHg.

Other embodiments herein relate to a method of increasing the diameter of a film comprising stretching a seamless tire innerliner radially, wherein the seamless tire innerliner comprises a dynamically vulcanized alloy of an elastomer and an engineering resin. In such embodiments, the seamless innerliner may be made undersized, and then stretched radially to the final size before placing on the building drum. The natural slow recovery of the DVA material may be beneficial in allowing the stretched sleeve to snug onto the building drum. In some embodiments, this snugging may be encouraged by using a heated building drum. This advantageously allows various sizes of tires to be made from one size of DVA film, thereby providing benefits such as cost savings, and reduced (in fact zero) waste.

### EXAMPLES

The tire innerliner used in this example was a contoured cast DVA innerliner of 63 phr Nylon 6/66 (UBE 5033B) and 100 phr brominated poly(isobutylene-*co*-*p-*methylstyrene) (0.75 mol.% Br, 5 wt.% paramethylstyrene in the copolymer) with 27 phr butyl-benzylsulfonamide ("BBSA"), with 10 phr maleated ethylene-ethyl acrylate, 2.5 phr SG2000 talc and less than 1 phr each of Irganox™ 1098, Tinuvin™ 622LD, copper iodide, zinc oxide, zinc stearate, and stearic acid.

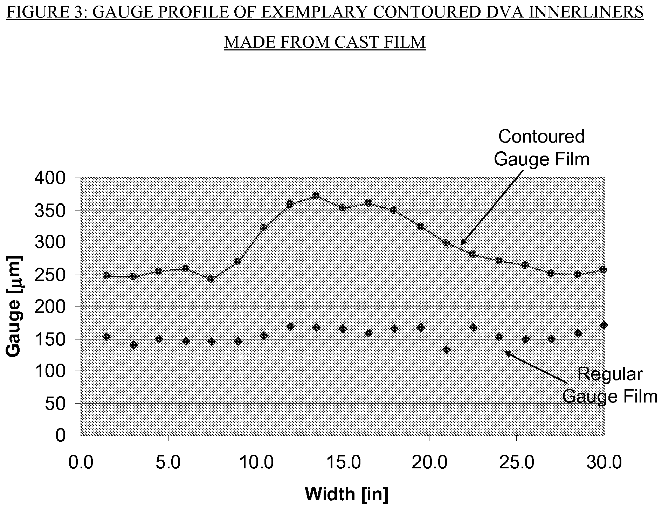

The thickness of the specimens varied and was measured manually by a Mahr Federal Inc. thickness gauge. The gauge (in µm) was measured over the width of the contoured sheet (in inches), and the data summarized in Figure 3. Figure 3 shows the gauge distribution for a contoured DVA film, as compared to regular gauge film.

These contoured DVA innerliners may be compared with standard innerliners having substantially uniform gauge. The following tests can be used: stress/strain properties, tensile properties, Shore A Hardness, and permeability testing. The contoured DVA innerliners are expected to demonstrate improved air impermeability, and have improved or maintained mechanical properties, as compared to at least the nominal properties shown below in Table 1.

**Table 1**

| Nominal Properties of a DVA Film for Tire Innerliner Application | |
|---|---|
| Tensile Strength | 16.00 MPa |
| Elongation at Break | 390% |
| Modulus at 100% strain | 6.9 MPa |
| Hardness (Shore A) | 86 |

## Claims

1. A method of making a tire innerliner (1) comprising:
providing a tire innerliner (1), wherein the tire innerliner (1) comprises a
dynamically vulcanized alloy of an elastomer and thermoplastic resin;
**characterized in that** the tire innerliner (1) is contoured such that the thickness of the innerliner (1) at the thickest and thinnest parts differ by more than 25%, and **in that** the step of providing the tire innerliner (1) comprises:
(i) providing a seamless tire innerliner, having a substantially uniform gauge, the seamless tire innerliner being in the form of a sleeve,
wherein the seamless tire innerliner comprises a dynamically vulcanized alloy of an elastomer and a thermoplastic resin;
(ii) subjecting the seamless tire innerliner to non-uniform stretching in at least one of the radial and axial directions; and
(iii) producing the contoured tire innerliner (1).

2. The method of claim 1, wherein the tire innerliner (1) comprises a cast film.

3. The method of claim 1 or claim 2, further comprising:
(i) extruding the dynamically vulcanized alloy; and
(ii) calendering the extruded dynamically vulcanized alloy, thereby providing the contoured tire innerliner (1).

4. The method of claim 1, wherein the seamless tire innerliner comprises a blown film.

5. The method of claim 1 or 4, wherein the stretching of step (ii) takes place on a heated expandable drum.

6. The method of any of claims 1 to 5, wherein the tire innerliner (1) has a centerline (12) and opposing edges (14), wherein the gauge at the centerline (12) is greater than the gauge at the edge (14), and has a ratio of thickness at the centerline (12) to thickness at the edge (14) of about 2.5:1.0.

7. The method of any one of claims 1 to 6, wherein the thickness at the edge (14) of the tire innerliner (1) is in the range of from about 10 to 500 µm.

## Patentansprüche

1. Verfahren zur Herstellung eines Reifen-Innerliners (1), bei welchem Verfahren
ein Reifen-Innerliner (1) bereitgestellt wird, wobei der Reifen-Innerliner (1) dynamisch vulkanisierte Legierung aus Elastomer und thermoplastischem Harz umfasst,
**dadurch gekennzeichnet, dass** der Reifen-Innerliner (1) so geformt ist, dass sich die Dicke des Innerliners (1) an der dicksten und dünnsten Stelle um mehr als 25 % unterscheidet und dass bei der Stufe, bei der der Reifen-Innerliner (1) bereitgestellt wird,
(i) ein nahtloser Reifen-Innerliner bereitgestellt wird, der eine im Wesentlichen einheitliche Stärke aufweist, welcher nahtlose Reifen-Innerliner in Form eines Schlauchs vorliegt, wobei der nahtlose Reifen-Innerliner dynamisch vulkanisierte Legierung aus Elastomer und thermoplastischem Harz umfasst,
(ii) der nahtlose Reifen-Innerliner einer nichteinheitlichen Streckung in mindestens einer der radialen und axialen Richtungen ausgesetzt wird, und
(iii) der geformte Reifen-Innerliner (1) hergestellt wird.

2. Verfahren nach Anspruch 1, bei dem der Reifen-Innerliner (1) eine Gießfolie umfasst.

3. Verfahren nach Anspruch 1 oder Anspruch 2, bei dem ferner
(i) die dynamisch vulkanisierte Legierung extrudiert wird, und
(ii) die extrudierte, dynamisch vulkanisierte Legierung kalandriert wird, wodurch der geformte Reifen-Innerliner (1) bereitgestellt wird.

4. Verfahren nach Anspruch 1, bei dem der nahtlose Reifen-Innerliner eine Blasfolie umfasst.

5. Verfahren nach Anspruch 1 oder 4, bei dem die Streckung aus Stufe (ii) auf einer beheizten expandierbaren Walze durchgeführt wird.

6. Verfahren nach einem der Ansprüche 1 bis 5, bei dem der Reifen-Innerliner (1) eine Mittellinie (12) und gegenüberliegende Kanten (14) aufweist, wobei die Stärke an der Mittellinie (12) größer ist als die Stärke an den Kanten (14) und das Verhältnis der Dicke an der Mittellinie (12) zur Dicke an den Kanten (14) etwa 2,5:1,0 beträgt.

7. Verfahren nach einem der Ansprüche 1 bis 6, bei dem die Dicke an den Kanten (14) des Reifen-Innerliners (1) im Bereich von etwa 10 bis 500 µm ist.

## Revendications

1. Procédé de fabrication d'un revêtement intérieur de pneu (1), comprenant les étapes suivantes:
former un revêtement intérieur de pneu (1), dans lequel le revêtement intérieur de pneu (1) comprend un alliage dynamiquement vulcanisé d'un élastomère et d'une résine thermoplastique,
**caractérisé en ce que** le revêtement intérieur de pneu (1) est profilé de telle sorte que l'épaisseur du revêtement intérieur (1) aux parties la plus épaisse et la plus mince diffère de plus de 25 %, et **en ce que** l'étape de formation du revêtement intérieur de pneu (1) comprend les étapes suivantes:
(i) former un revêtement intérieur de pneu sans couture présentant une épaisseur sensiblement uniforme, le revêtement intérieur de pneu sans couture se présentant sous la forme d'un manchon, dans lequel le revêtement intérieur de pneu sans couture comprend un alliage dynamiquement vulcanisé d'un élastomère et d'une résine thermoplastique;
(ii) soumettre le revêtement intérieur de pneu sans couture à un étirage non uniforme dans au moins une des directions radiale et axiale; et
(iii) produire le revêtement intérieur de pneu profilé (1).

2. Procédé selon la revendication 1, dans lequel le revêtement intérieur de pneu (1) comprend un film coulé.

3. Procédé selon la revendication 1 ou la revendication 2, comprenant en outre:
(i) l'extrusion de l'alliage dynamiquement vulcanisé; et
(ii) le calandrage de l'alliage dynamiquement vulcanisé extrudé, formant de ce fait le revêtement intérieur de pneu profilé (1).

4. Procédé selon la revendication 1, dans lequel le revêtement intérieur de pneu sans couture comprend un film soufflé.

5. Procédé selon la revendication 1 ou 4, dans lequel l'étirage à l'étape (ii) est réalisé sur un tambour expansible chauffé.

6. Procédé selon l'une quelconque des revendications 1 à 5, dans lequel le revêtement intérieur de pneu (1) comprend un axe médian (12) et des bords opposés (14), dans lequel l'épaisseur à l'axe médian (12) est supérieure à l'épaisseur aux bords (14), et présente un rapport de l'épaisseur à l'axe médian (12) sur l'épaisseur au bord (14) d'environ 2,5:1,0.

7. Procédé selon l'une quelconque des revendications 1 à 6, dans lequel l'épaisseur au bord (14) du revêtement intérieur de pneu (1) est comprise dans la gamme d'environ 10 µm à 500 µm.
